# EUROPEAN PATENT SPECIFICATION

(11) **EP 1 052 027 B1**
(45) Date of publication and mention of the grant of the patent: **21.02.2007**
(21) Application number: 99957417.1
(22) Date of filing: 06.12.1999
(51) Int. Cl.: B01J 35/00

(54) **USE OF COATING LIQUID COMPRISING ORGANIC COLORING MATTER FOR FORMING PHOTOCATALYST-CONTAINING COATING FILM**
VERWENDUNG EINER FARBSTOFFBEINHALTENDEN BESCHICHTUNGSFLÜSSIGKEIT ZUR HERSTELLUNG VON EINEM FOTOKATALYSATORENTHALTENDEN BESCHICHTUNGSFILM
UTILISATION D'UN LIQUIDE DE COUCHAGE COMPRENANT UN COLORANT ORGANIQUE POUR FORMER UNE COUCHE CONTENANT UN PHOTOCATALYSEUR

(30) Priority: 07.12.1998 JP 34729898
(43) Date of publication of application: 15.11.2000
(73) Proprietor: Bridgestone Corporation, Tokyo (JP)
(72) Inventor: OGATA, Shiro Tao Inc., Shibuya-ku Tokyo 151-0072 (JP); MATSUI, Yoshimitsu Tao Saga Kenkyusho, Fujuitsu-gun Saga 843-0302 (JP); TAKECHI, Hiroaki Tao Saga Kenkyusho, Fujuitsu-gun Saga 843-0302 (JP); TANAKA, Shun'ichi Bau Kensetsu Kabushiki Kaisha, Chuo-ku Tokyo 103-0004 (JP)
(74) Representative: van Westenbrugge, Andries
(86) International application number: PCT/JP1999/006825
(87) International publication number: WO 2000/033977

(56) References cited:
- EP-A- 0 932 081
- WO-A-96/17007
- WO-A-98/55899
- GB-A- 2 002 374
- JP-A- 10 287 846
- JP-A- 10 296 185
- JP-A- 10 314 600
- US-A- 3 623 865
- US-A- 4 806 514
- PATENT ABSTRACTS OF JAPAN vol. 1999, no. 14, 22 December 1999 (1999-12-22) & JP 11 256351 A (NISSHIN STEEL CO LTD), 21 September 1999 (1999-09-21)
- PATENT ABSTRACTS OF JAPAN vol. 1999, no. 01, 29 January 1999 (1999-01-29) & JP 10 277368 A (NOF CORP), 20 October 1998 (1998-10-20)
- PATENT ABSTRACTS OF JAPAN vol. 1999, no. 01, 29 January 1999 (1999-01-29) & JP 10 277401 A (NOF CORP), 20 October 1998 (1998-10-20)

## Description

### TECHNICAL FIELD

The present invention relates to the use of an organic dye in a method for coating a substrate for verifying, during coating of a photocatalyst film coating liquid onto a substrate, whether film formation has occurred, and whether the transparent photocatalyst film so formed has photocatalytic ability.

### BACKGROUND ART

Recently, there have been attempts to use photocatalysts to decompose, purify or sterilize toxic substances, foul odor components, oils, and the like produced in the everyday life environment, and the range of application of photocatalysts is expanding rapidly. To utilize such photocatalytic functionalities, the photocatalyst is typically employed, for example, by applying it to a surface of a substrate such as glass. In many cases, photocatalyst film coating liquids and coating methods that make losses in cosmetic properties of substrate surfaces cause product value to decline, and are therefore deemed unsuitable. For this reason, many photocatalyst film coating liquids are transparent photocatalyst film coating liquids that form transparent photocatalyst films after film formation.

On the other hand, there are also rare photocatalyst film coatings that have been colored by means of organic polymers added as binders to photocatalyst film coating liquids. Even in such a case, since virtually all photocatalyst film coating liquids are heated as a condition of film formation, the undesired color disappears during the film formation under heat in most cases. The thickness of such photocatalyst film is typically about 0.1-2.0 µm. In the case of a transparent photocatalyst film, it is very difficult to verify whether or not film formation has occurred. The only method for strict verification of whether or not film formation has occurred is an inspection with a surface microstructure analysis device such as an electron microscope, etc., but an inspection over the entire face of the photocatalyst coated face is not possible. One known method for verifying whether a formed transparent photocatalyst film has photocatalytic ability involves the application of an organic dye to the photocatalyst film surface and the determination on the basis of the disappearance of the color thereof. However, this method has a problem that it is not possible to distinguish whether film formation was incomplete or whether there was a defect with photocatalytic ability subsequent to film formation.

Particularly when the material targeted for formation of a photocatalyst film is located outdoors, such as a structure, environmental construction, or civil engineering construction, or in the case of heavy machines that are difficult to move or to heat up, it is necessary to perform the coating of the photocatalyst film on-site, whereby for enforcement management reasons it is not easy to verify the film formation or verify the photocatalytic ability. Even with the method of applying an organic dye after the coating of the photocatalyst in order to verify the photocatalytic ability, there is an economic problem associated with the increased number of steps, as well as the fact that even application of the organic dye over a work site in a large application area is not realistic.

### DISCLOSURE OE THE INVENTION

It is an object of the present invention to provide the use of an organic dye in a method for coating a substrate for verifying whether or not film formation has occurred during a coating process of a photocatalyst film coating liquid onto a substrate or decomposition-resistant binder layer, and whether the photocatalyst film so formed has photocatalytic ability.

As regards photocatalyst functionalities, photocatalyst functionalities such as photodecomposing action on the surfaces of photocatalyst semiconductor metal fine particles, etc. are utilized; when photocatalysts having such functionalities are actually used, it is necessary to form a film on the surface of a substrate such as products and structures, environmental constructions, or civil engineering constructions of various kinds, and as it is further desirable for the film to keep cosmetic qualities of the substrate surface, there was a need for the photocatalyst coating film and underlying decomposition-resistant binder layer to consist of colorless transparent films, and to avoid degradation of the substrate or surfaces thereof. Accordingly, many of the various photocatalyst film coating liquids, etc. available commercially are transparent photocatalyst film coating liquids that are colorless and transparent at film formation; despite the importance in terms of quality/enforcement management of verification of film formation for ultra-thin photocatalyst films of 1 µm or thinner that are difficult to verify visually, the importance thereof was not afforded appropriate recognition.

In the course of extensive research and development concerning a viable photocatalyst, the inventors recognized the importance of the aforementioned problems, conducted painstaking research concerning solution thereof, and used transparent photocatalyst film coating liquids of conventional transparent photocatalyst film coating liquids into which organic dyes had been incorporated. As a result, they discovered that, during the coating process of a transparent photocatalyst film coating liquid onto a substrate, it is possible to readily verify whether film formation has occurred and to readily verify whether the transparent photocatalyst film so formed has photocatalytic ability. Further they made confirmation as to the effects of the organic dyes on transparent photocatalyst films, whereby the present invention was perfected.

Specifically, the present invention relates to the use of an organic dye in a method for coating a substrate employing an organic dye-containing photocatalyst film coating liquid, comprising the step of coating a photocatalyst film coating liquid containing an organic dye, wherein it is possible, when a photocatalyst film coating liquid has been coated onto a substrate, to verify whether film formation has occurred, and to verify that the transparent photocatalyst film so formed has photocatalytic ability, according to claims 1 or 4; the use of an organic dye in a method for coating a substrate employing the aforementioned organic dye-containing photocatalyst film coating liquid, wherein the photocatalyst film coating liquid is a transparent photocatalyst film coating liquid that forms a transparent photocatalyst film after film formation; the use of an organic dye in a method for coating a substrate employing the aforementioned organic dye-containing photocatalyst film coating liquid, wherein the photocatalyst film coating liquid is coated onto an underlying coated decomposition-resistant binder layer, according to claims 2 or 5; the use of an organic dye in a method for coating a substrate employing the aforementioned organic dye-containing photocatalyst film coating liquid, wherein the organic dye is an organic dye whose molecule comprises a metallic element; the use of an organic dye in a method for coating a substrate employing the aforementioned organic dye-containing photocatalyst film coating liquid, wherein the organic dye is one or more organic dyes selected from azo, phthalocyanine, and metal complex-containing condensed polycyclic dyes and pigments; and the use of an organic dye in a method for coating a substrate employing the aforementioned organic dye-containing photocatalyst film coating liquid, wherein the organic dye is used together with one or more additives selected from dispersants, moisture conditioners, and thickeners.

The present invention further relates to the use of an organic dye in a method for coating a substrate employing an organic dye-containing decomposition-resistant binder coating liquid, comprising the steps of coating a decomposition-resistant binder coating liquid containing an organic dye onto a substrate as an underlayer; and coating thereover a photocatalyst film coating liquid, wherein it is possible when a decomposition-resistant binder coating liquid has been coated onto a substrate to verify whether film formation of the binder layer has occurred, and whether the photocatalyst film formed thereon by a photocatalyst film coating liquid has photocatalytic ability, according to claims 3 or 6; the use of an organic dye in a method for coating a substrate employing the aforementioned organic dye-containing decomposition-resistant binder coating liquid, wherein the photocatalyst film coating liquid is a transparent photocatalyst film coating liquid for forming a transparent photocatalyst film after film formation; the use of an organic dye in a method for coating a substrate employing the aforementioned organic dye-containing decomposition-resistant binder coating liquid, wherein the organic dye is one or more organic dyes selected from azo, phthalocyanine, and metal complex-containing condensed polycyclic dyes and pigments; and the use of an organic dye in a method for coating a substrate employing the aforementioned organic dye-containing decomposition-resistant binder coating liquid, wherein the organic dye is used together with one or more additives selected from dispersants, moisture conditioners, and thickeners.

The present invention still further relates to the use of an organic dye-containing photocatalyst film coating liquid containing an organic dye, wherein it is possible during coating of a photocatalyst film coating liquid onto a substrate to verify whether film formation has occurred, and to verify whether the transparent photocatalyst film so formed has photocatalytic ability; the aforementioned organic dye-containing photocatalyst film coating liquid, wherein the photocatalyst film coating liquid is a transparent photocatalyst film coating liquid that forms a transparent photocatalyst film after film formation; the aforementioned organic dye-containing photocatalyst film coating liquid, wherein the transparent photocatalyst film coating liquid is a transparent photocatalyst film coating liquid comprising an amorphous titanium peroxide sol and an anatase titanium oxide sol; the aforementioned organic dye-containing photocatalyst film coating liquid, wherein the organic dye is an organic dye whose molecule comprises a metallic element; the aforementioned organic dye-containing photocatalyst film coating liquid, wherein the organic dye is one or more organic dyes selected from azo, phthalocyanine, and metal complex-containing condensed polycyclic dyes and pigments; and the aforementioned organic dye-containing photocatalyst film coating liquid, wherein the organic dye is used together with one or more additives selected from dispersants, moisture conditioners, and thickeners.

The present invention still further relates to the use of a photocatalyst film coating liquid containing an organic compound whose molecule comprises a metallic element, wherein the photocatalyst film coating liquid has an enhanced photocatalytic functional activity and physical strength of the photocatalytic film due to the metallic element of said organic compound which decomposes with photoexcitation of the photocatalyst; the aforementioned photocatalyst film coating liquid, wherein the organic compound whose molecule comprises a metallic element is an organic dye whose molecule comprises a metallic element; an organic dye-containing decomposition-resistant binder coating liquid containing an organic dye wherein it is possible, when a decomposition-resistant binder coating liquid has been coated onto a substrate, to verify whether film formation of the binder layer has occurred, and whether the photocatalyst film formed thereon by a - photocatalyst film coating liquid has photocatalytic ability; the aforementioned organic dye-containing decomposition-resistant binder coating liquid, wherein the decomposition-resistant binder coating liquid is a coating liquid capable of forming a transparent decomposition-resistant binder layer after film formation; the aforementioned organic dye-containing decomposition-resistant binder coating liquid, wherein the decomposition-resistant binder coating liquid is an amorphous titanium peroxide sol; the aforementioned organic dye-containing decomposition-resistant binder coating liquid, wherein the organic dye is one or more organic dyes selected from azo, phthalocyanine, and metal complex-containing condensed polycyclic dyes and pigments; and the aforementioned organic dye-containing decomposition-resistant binder coating liquid, wherein the organic dye is used together with one or more additives selected from dispersants, moisture conditioners, and thickeners.

The present invention still further relates to the use of an organic dye in a method for coating substrates, fixtures, and constructions by the aforementioned coating methods.

Examples of materials for substrates in the invention are ceramics, glass, and other inorganic materials, plastics, rubber, wood, paper, and other organic materials, aluminum, steel, and other metallic materials. The size and shape of the substrate in the present invention are not limited and may be of tabular, film, honeycomb, fiber, filter sheet, bead, or foamed configuration, or some integrated form thereof. As regards the application form of the substrates in the present invention, any form permitting use of a photocatalyst, such as various products, parts, etc., is acceptable, examples being tiles, windowpanes, blocks, unit baths, illumination and other fixtures, as well as exterior walls, roofs, pillars, windows, traffic signals, and other constructions, as well as bodies and interior walls of automobiles, electric trains, jets, cranes, and other heavy transport equipment.

For acrylonitrile resins, vinyl chloride resin, polycarbonate resins, methyl methacrylate resins (acrylic resins), polyester resins, polyurethane resins, and other such organic polymer material substrates, and coating face surfaces comprising these organic polymer materials, on which the substrate and surface material thereof are subjected to decomposing action by photocatalytic ability, it is preferable to provide an underlayer of a decomposition-resistant binder layer between the substrate or coated face and the photocatalyst film.

As the photocatalyst film coating liquid in the present invention, it is possible to use any of the conventionally known photocatalyst film coating liquids; in preferred practice, however, it will be a transparent photocatalyst film coating liquid capable of forming a transparent photocatalyst film after film formation. An example of such a transparent photocatalyst film coating liquid is a suspension containing, for example, photocatalyst semiconductor metal particles and a binder; of these, a transparent photocatalyst film coating liquid capable of film formation at normal temperature-120°C is preferred. Where a film formation requires heating up to a high temperature, for example, to 300-500°C, it is necessary to use organic dyes that will not decompose or discolor at such temperatures, so that range of organic dyes that can be used is limited.

Examples of the photocatalyst semiconductor in the aforementioned photocatalyst film coating liquid are TiO₂, ZnO, SrTiO₃, CdS, CdO, CaP, InP, In₂O₃, CaAs, BaTiO₃, K₂NbO₃. Fe₂O₃, Ta₂O₅, WO₃, SnO₂, Bi₂O₃. NiO, Cu₂O, SiC, SiO₂, MoS₂, MoS₃, InPb, RuO₂, CeO₂, and other substances having photocatalyst action; of these, titanium dioxide TiO₂ is preferred; materials having photocatalytic ability are used in forms of sol, fine powder, or fine particle approximately 0.001-20 µm in particle diameter. Examples of these materials having photocatalytic ability are the commercially available ST-01 (manufactured by Ishihara Techno KK), ST-31 (manufactured by Ishihara Techno KK), anatase titanium oxide sol TAK70 (manufactured by TAO Inc.), and the like.

A specific example of a preferred transparent photocatalyst film coating liquid is a liquid mixture of an amorphous titanium peroxide sol and an anatase titanium oxide sol. The amorphous titanium peroxide sol may be prepared as follows, for example. To an aqueous solution of a titanium salt, such as titanium tetrachloride TiCl₄, is added ammonia water or an alkali hydroxide, such as sodium hydroxide, and a reaction is brought at pH 6-7. The resultant faint bluish white amorphous titanium hydroxide Ti(OH)₄ (also referred to as orthotitanic acid H₄TiO₄) is washed/separated, then treated with an aqueous hydrogen peroxide solution to give an aqueous solution of amorphous titanium peroxide. This amorphous titanium peroxide aqueous solution is amorphous at normal temperature and is not yet crystallized into anatase titanium oxide, and contains ultrafine particles, giving it high adhesion, high film forming properties, and an ability to produce a uniform flat thin film, as well as the property that the dry coating film does not dissolve in water. The anatase titanium oxide sol can be prepared by heating the aforementioned amorphous titanium peroxide sol for several hours at 100°C or above.

The decomposition-resistant binder coating liquid used in the present invention can be any one capable of protecting the substrate from the decomposing action of the photocatalyst, and of bonding the substrate with the photocatalyst layer; besides the amorphous titanium peroxide sol mentioned earlier, other examples are coating liquids containing water glass, colloidal silica, polyorganosiloxane, and other silicon compounds, zinc phosphate, aluminum phosphate, and other phosphates, biphosphates, cement, and other inorganic binders, as well as fluoropolymers, silicone polymers, and other organic binders, as disclosed in JP(A) 7-171408. Of these decomposition-resistant binder coating liquids, those that, like the aforementioned amorphous titanium peroxide sol, are transparent after coating are preferred.

The organic dyes used in the present invention can be any one capable of decomposing and losing color due to the photocatalyst. Examples are organic pigments and natural or synthetic dyes. Of these, water soluble and highly stable pigments and dyes, for example, azo dyes, particularly metal salt mordant azo dyes, metal complex azo dyes, basic azo dyes, phthalocyanine pigments, and metal complex-containing condensed polycyclic dyes or pigments, such as porphyrin-based natural dye derivatives are preferred. These are decomposed solely by oxidative decomposing action of the photocatalysts, and not only make them suitable for verifying photocatalytic ability, but also enhance photocatalytic activity.

As the organic dyes used in the present invention, including the aforementioned azo, phthalocyanine, and metal complex-containing condensed polycyclic dyes and pigments, the use of organic dyes whose molecule contains a metallic element, such as chromium, copper, calcium, cobalt, iron, aluminum, strontium is preferred. For example, metal atom-containing phthalocyanine pigments in which two central hydrogen atoms of the phthalocyanine are substituted by a metal include those with a strong ionic bonding component (Na, K, Ca, Be, Ca, Ba, Cd, Mg, etc.) and those with a strong covalent bonding component (Cu, Ni, Zn, Cr, Co, Al, Pt, Fe, V, etc.). Where the organic dye molecule contains a metallic element, the organic dye is decomposed by photocatalytic ability, as a result of which the metal element remains as an oxide or ion, effectively functioning as an electron-capturing metal for promoting and assisting the photocatalytic reaction, thus simultaneously increasing photocatalytic ability and increasing the physical strength of the photocatalyst film.

In the present invention, when an organic dye is used, one or more additives selected from dispersants, moisture conditioners and thickeners may be used together therewith. In a preferred practice, such additives contain metallic compounds, such as calcium carbonate; those containing various electron-capturing metals are also advantageous for use.

As noted above, incorporation of the organic dyes into the photocatalyst film coating liquid or the decomposition-resistant binder coating liquid is preferably accomplished through uniform dispersion of the organic dye using a suitable dispersant. For example, where commercially available pigments, etc. are used, a recommended method of use thereof may be as follows. Generally, dispersants (solvents) for organic dyes include ethyl alcohol, propyl alcohol, and other alcohols, ethyl acetate and other esters, methyl ethyl ketone and other ketones, toluene, xylene, and other aromatic solvents, and nonionic surfactants.

When compounding the organic dye and the photocatalyst film coating liquid, the proportions thereof may be selected appropriately so as to give coloring to an extent such that it is possible to verify whether film formation has occurred, and so as to give decoloring to an extent such that photocatalytic ability on the part of the formed transparent photocatalyst film may be verified quickly. The organic dye-containing photocatalyst film coating liquid of the present invention, prepared by combining the organic dye and the photocatalyst film coating liquid, can be stored in as-prepared in a colored state under non-photoexcitation conditions.

When compounding the organic dye and the decomposition-resistant binder coating liquid, the proportions thereof may be selected appropriately so as to give coloring to an extent such that it is possible to verify whether film formation of the decomposition-resistant binder layer has occurred, and so as to give decoloring to an extent such that photocatalytic ability on the part of the formed transparent photocatalyst film may be verified quickly. The organic dye-containing decomposition-resistant binder coating liquid of the present invention, prepared by combining the organic dye and the decomposition-resistant binder coating liquid, can be stored in as-prepared in a colored state.

During coating onto a substrate of the organic dye-containing photocatalyst film coating liquid of the present invention containing the organic dye, or during coating onto a substrate of the organic dye-containing decomposition-resistant binder coating liquid of the present invention containing the organic dye, it is possible to ascertain whether film formation has occurred through visual verification of coloring by the organic dye. It is also possible to ascertain whether the transparent photocatalyst film which has formed has photocatalytic ability through visual verification of decoloring of the photocatalyst film or decomposition-resistant binder layer.

Where it is necessary to verify decoloration in a short time, a colorimeter may be used to measure the change in the extent of discoloration before and after irradiation, namely, the color difference (ΔE*ab). The color difference (ΔE*ab) is obtained by first calculating the difference in lightness (ΔL*), the difference in red-green system color tone (Δa*), and the difference in brown-blue system color tone (Δb*), before and after irradiation, then taking the square root of the sum of squares of (ΔL*), (Δa*), and (Δb*). For example, a large (ΔE*ab) value indicates greater fading of the photocatalyst before and after irradiation. Setting of decoloration time with reference to a particular object, such as the need to verify decoloration in a short time, may be accomplished by selecting organic dyes that are readily decomposed by photocatalysts, or by manipulating the amount of organic dye incorporated.

### BEST MODE FOR CARRYING OUT THE INVENTION

The invention is described in greater detail through examples. However, the technical scope of the invention is not limited to these examples.

### EXAMPLE 1

### (Preparation of organic dye-containing photocatalyst film coating liquid)

A mixture of equal amounts of 0.85% (on dry solids basis) amorphous titanium peroxide solution TK100 (manufactured by TAO Inc.) and 0.85% (on dry solids basis) anatase titanium oxide sol TA100 (manufactured by TAO Inc.) was used as a transparent photocatalyst film coating liquid. As organic dyes, the 8 organic dyes indicated by No. (1)-(8) in Table 1 (manufactured by Sumika Color) were used in 20-fold dilution. 95 weight parts of the aforementioned transparent photocatalyst film coating liquid and 5 weight parts of each 20-fold diluted organic dye were compounded so that the organic dye was uniform, to prepare transparent photocatalyst film coating liquids containing organic dyes. For comparison, a transparent photocatalyst film coating liquid consisting of the aforementioned anatase titanium oxide sol without added organic dye was prepared. Of the aforementioned organic dyes Nos. (1)-(8), Nos. (1), (2), (6)-(8) are phthalocyanine organic dyes, Nos. (3) and (5) are azo organic dyes, and No. (4) is a nitrosoazo organic dye.

**Table 1**

| No. | Added organic dye | Contained metal | Color difference (ΔE*ab) | Decoloration days | Film hardness |
|---|---|---|---|---|---|
| (1) | POLLUX BLUE PM-B | Cu | 10.76 | 4 days | ≥9H |
| (2) | POLLUX BLUE PC-AD | Cu | 10.05 | 4 days | ≥9H |
| (3) | POLLUX BROWN PM-BR | Cu | 10.47 | 3 days | ≥9H |
| (4) | LAWN GREEN | Fe | 9.07 | 3 days | ≥9H |
| (5) | POLLUX YELLOW PM-L5G | Ca | 7.49 | 1 day | ≥9H |
| (6) | POLLUX RED PC_1T1070 | Ca | 9.65 | 1 day | ≥9H |
| (7) | POLLUX RED PC.1T1071 | Ba | 0.33 | 4 days | ≥9H |
| (8) | POLLUX RED PC.1T1072 | Sr | 7.96 | 3 days | ≥9H |
| Comparison | - | - | 7.85 | - | 6H |

### (Film formation by organic dye-containing photocatalyst film coating liquid)

These organic dye-containing photocatalyst film coating liquid were coated (coating weight 0.8 g/100 cm²) to uniform thickness onto commercially available tiles using spray gun FS-G05-1 with a 0.5 mm-diameter round spray nozzle manufactured by Meiji Kikai. After drying at normal temperature, heating to 100°C was performed with an infrared heating heater to effect film formation. The tile surface on which the film was formed was colored by the respective organic dye, enabling ready visual verification of film formation over the entire tile face.

### (Photocatalytic ability test)

For the photocatalytic ability tests, irradiation with a black light emitting a 360-380 nm single wavelength was carried out for 1 hour at a distance of 10 cm. After that, using a Minolta Camera colorimeter, the respective extent of discoloration was checked for color difference (ΔE*ab). A larger color difference (ΔE*ab) indicates a greater extent of fading on the tile surface before and after irradiation. Results are shown in Table 1. From the color difference (ΔE*ab) in Table 1, it is apparent that organic dyes having Fe, Cu, Ca, or Sr as contained metal species had the greatest fading, with organic dyes containing these metal species being preferred. Also, continuous direct irradiation with direct sunlight under clear skies was carried out and the days until decoloration occurred were measured. Decoloration day results are given in Table 1. It is apparent from Table 1 that films having photocatalytic ability decolored in 1-4 days.

### (Photocatalyst film hardness test)

Photocatalyst film hardness tests were carried out by rubbing the photocatalyst film on each tile with tips of pencils of various hardness. The hardness given by the test is expressed as the hardness of the pencil that leaves no damage: for example, "≥9H" means that rubbing with the tip of a 9H pencil leaves no damage. Results are given in Table 1. From Table 1, it is apparent that, photocatalyst films containing organic dyes including No. (5) whose molecule does not contain a metal atom but which contains an additive containing calcium carbonate, had increased physical strength.

### EXAMPLE 2

### (Preparation of organic dye-containing decomposition-resistant binder coating liquid, etc.)

95 weight parts of 0.85 wt% (on solids basis) amorphous titanium peroxide solution (manufactured by TAO Inc.) and 5 weight parts of two organic dyes from Sumika Color, indicated as No. (5) and (6) in Table 2, each organic dye being diluted 20-fold, were compounded so that the organic dye was uniform, to prepare decomposition-resistant binder coating liquids. Organic dye-containing decomposition-resistant binder layers were formed on substrates by a method identical to EXAMPLE 1 except that coating amount was 0.4 g/100 cm². The binder layers were then coated with a transparent photocatalyst coating liquid of 0.85 wt% (on solids basis) anatase titanium oxide sol (manufactured by TAO Inc.) (coating weight 0.8 g/100 cm²), dried at normal temperature, and heated up to 100°C with an infrared heating heater to effect film formation.

For comparison, one with anatase titanium oxide sol coated over a coating layer of amorphous titanium peroxide solution containing no organic dye was used, and a photocatalytic ability test and photocatalyst film hardness test were conducted in the same manner as EXAMPLE 1, except that irradiation time was 45 minutes. Results are given in Table 2. From the results in Table 2, it is apparent that colorization of the underlying organic dye-containing decomposition-resistant binder layers decolorized under the photocatalytic action of the photocatalyst film, and that the color difference (ΔE*ab) values at that time enabled rapid estimates of photocatalytic ability.

**Table 2**

| No. | Added organic dye | Contained metal | Color difference (ΔE*ab) | Decoloration days | Film hardness |
|---|---|---|---|---|---|
| (5) | POLLUX YELLOW PM-L5G | Ca | 6.60 | 1 day | ≥9H |
| (6) | POLLUX RED PC. 1T1070 | Ca | 10.11 | 1 day | ≥9H |
| Comparison | - | - | 7.34 | - | 6H |

### INDUSTRIAL APPLICABILITY

According to the present invention, through the use of a transparent photocatalyst film coating liquid of an organic dye-incorporated transparent photocatalyst film coating liquid, it is now possible during a coating process of a transparent photocatalyst film coating liquid performed on outdoor constructions, etc., to readily verify visually whether film formation has occurred, and also to readily verify whether the transparent photocatalyst film so formed has photocatalytic ability. By incorporating an organic dye into a decomposition-resistant binder coating liquid, it is now possible to readily verify visually whether a decomposition-resistant binder layer has been coated evenly, and also to readily verify whether a transparent photocatalyst film formed thereover has photocatalytic ability. By the use of metal atom-containing organic dyes, the photocatalytic functional activity and the physical strength of the photocatalyst film may be improved.

## Claims

1. Use of an organic dye in a method for coating a substrate, for visually verifying photocatalytic ability of the photocatalyst film formed on the substrate by visually verifying decoloration of the photocatalyst film, wherein the method comprises;
- coating a photocatalyst film coating liquid onto the substrate, wherein the photocatalyst film coating liquid contains a photocatalyst and an organic dye decomposed and decolorized by a photocatalyst, and wherein the photocatalyst film coating liquid is a transparent photocatalyst film coating liquid.

2. Use of an organic dye in a method for coating a substrate according to claim 1, for visually verifying photocatalytic ability of the photocatalyst film formed on the substrate by visually verifying decoloration of the photocatalyst film, wherein the method comprises;
- a decomposition-resistant binder coating liquid is coated onto the substrate as an underlayer; and
- coating a photocatalyst film coating liquid onto the decomposition-resistant binder underlayer, wherein the photocatalyst film coating liquid contains a photocatalyst and an organic dye decomposed and decolorized by a photocatalyst, and wherein the photocatalyst film coating liquid is a transparent photocatalyst film coating liquid.

3. Use of an organic dye in a method for coating a substrate, for visually verifying photocatalytic ability of the photocatalyst film formed on the substrate by visually verifying decoloration of the decomposition-resistant binder layer, wherein the method comprises;
- a decomposition-resistant binder coating liquid containing an organic dye is coated onto the substrate as an underlayer, wherein the organic dye is decomposed and decolorized by a photocatalyst; and
- coating a photocatalyst film coating liquid onto the decomposition-resistant binder underlayer, wherein the photocatalyst film coating liquid contains a photocatalyst, and wherein the photocatalyst film coating liquid is a transparent photocatalyst film coating liquid.

4. Use of an organic dye in a method for coating a substrate, for visually verifying film formation on the substrate, wherein the method comprises;
- coating a photocatalyst film coating liquid onto the substrate, wherein the photocatalyst film coating liquid contains a photocatalyst and an organic dye decomposed and decolorized by a photocatalyst, and wherein the photocatalyst film coating liquid is a transparent photocatalyst film coating liquid.

5. Use of an organic dye in a method according to claim 4 for coating a substrate, for visually verifying film formation on the decomposition-resistant binder layer, wherein the method comprises;
- a decomposition-resistant binder coating liquid is coated onto the substrate as an underlayer; and
- coating a photocatalyst film coating liquid onto the decomposition-resistant binder underlayer, wherein the photocatalyst film coating liquid contains a photocatalyst and an organic dye decomposed and decolorized by a photocatalyst, and wherein the photocatalyst film coating liquid is a transparent photocatalyst film coating liquid.

6. Use of an organic dye in a method for coating a substrate, for visually verifying film formation on the substrate, wherein the method comprises;
- a decomposition-resistant binder coating liquid containing an organic dye is coated onto the substrate as an underlayer, wherein the organic dye is decomposed and decolorized by a photocatalyst; and
- coating a photocatalyst film coating liquid onto the decomposition-resistant binder underlayer, wherein the photocatalyst film coating liquid contains a photocatalyst, and wherein the photocatalyst film coating liquid is a transparent photocatalyst film coating liquid.

7. Use according to one of claims 1 to 6, wherein the organic dye is further used for improving physical strength of the photocatalyst film formed on the substrate, wherein the organic dye is a metal-atom containing organic dye.

8. Use according to one of claims 1-7, wherein the organic dye is one or more organic dye(s) selected from azo, phthalocyanine, and metal complex-containing condensed polycyclic dyes and pigments.

9. Use according to one of claims 1-8, wherein the organic dye is used together with one or more additive(s) selected from dispersants, moisture conditioners, and thickeners.

10. Use according to one of claims 1-9, wherein the photocatalyst film coating liquid comprises a suspension containing semiconductor metal particles and a binder.

11. Use according to one of claims 1-10, wherein the photocatalyst is selected from the group consisting of TiO₂, ZnO, SrTiO₃, CdS, CdO, CaP, InP, In₂O₃, CaAs, BaTiO₃, K₂NbO₃, Fe₂O₃, Ta₂O₅, WO₃, SnO₂, Bi₂O₃, NiO, Cu₂O, SiC, SiO₂, MoS₂, MoS₃, TnPb, RuO₂, CeO₂.

12. Use according to one of claims 1-11, wherein the organic dye is an organic dye whose molecule comprises a metallic element.

13. Use according to claim 12, wherein the metallic element is selected from the group consisting of Fe, Cu, Ca and Sr.

14. Use according to one of claims 1-13, wherein the transparent photocatalyst film coating liquid comprises an amorphous titanium peroxide sol and an anatase titanium oxide sol.

15. Use according to one of claims 1-14, wherein the decomposition-resistant binder coating liquid is an amorphous titanium peroxide sol.

## Patentansprüche

1. Verwendung eines organischen Farbstoffs bei einem Verfahren zum Beschichten eines Substrats für den visuellen Nachweis der photokatalytischen Fähigkeit der auf dem Substrat ausgebildeten Photokatalysatorschicht durch visuellen Nachweis des Entfärbens der Photokatalysatorschicht,
wobei das Verfahren folgendes aufweist:
- aufbringen einer Beschichtungsflüssigkeit für eine Photokatalysatorschicht auf dem Substrat, wobei die Beschichtungsflüssigkeit für eine Photokatalysatorschicht einen Photokatalysator und einen organischen Farbstoff enthält, der von einem Photokatalysator zersetzt und entfärbt wird, und wobei die Beschichtungsflüssigkeit für eine Photokatalysatorschicht eine Beschichtungsflüssigkeit für eine transparente Photokatalysatorschicht ist.

2. Verwendung eines organischen Farbstoff bei einem Verfahren zum Beschichten eines Substrat nach Anspruch 1 für den visuellen Nachweis der photokatalytischen Fähigkeit der auf dem Substrat ausgebildeten Photokatalysatorschicht durch visuellen Nachweis des Entfärbens der Photokatalysatorschicht,
wobei das Verfahren folgendes aufweist:
- eine Beschichtungsflüssigkeit für ein zersetzungsbeständiges Bindemittel wird als Unterschicht auf dem Substrat aufgebracht und
- aufbringen einer Beschichtungsflüssigkeit für eine Photokatalysatorschicht auf der Unterschicht aus dem zersetzungsbeständigen Bindemittel, wobei die Beschichtungsflüssigkeit für eine Photokatalysatorschicht einen Photokatalysator und einen organischen Fahrstoff enthält, der von einem Photokatalysator zersetzt und entfärbt wird, und wobei die Beschichtungsflüssigkeit für eine Photokatalysatorschicht eine Beschichtungsflüssigkeit für eine transparente Photokatalysatorschicht ist.

3. Verwendung eines organischen Farbstoffs bei einem Verfahren zum Beschichten eines Substrats für den visuellen Nachweis der photokatalytischen Fähigkeit der auf dem Substrat ausgebildeten Photokatalysatorschicht, indem das Entfärben der zersetzungsbeständigen Bindemittelschicht visuell nachgewiesen wird,
wobei das Verfahren folgendes aufweist:
- eine Beschichtungsflüssigkeit für ein zersetzungsbeständiges Bindemittel, die einen organischen Farbstoff enthält, wird als Unterschicht auf dem Substrat aufgebracht, wobei der organischen Farbstoff von einem Photokatalysator zersetzt und entfärbt wird; und
- aufbringen einer Beschichtungsflüssigkeit für eine Photokatalysatorschicht auf der Unterschicht aus dem zersetzungsbeständigen Bindemittel, wobei die Beschichtungsflüssigkeit für eine Photokatalysatorschicht einen Photokatalysator enthält, und wobei die Beschichtungsflüssigkeit für eine Photokatalysatorschicht eine Beschichtungsflüssigkeit für eine transparente Photokatalysatorschicht ist.

4. Verwendung eines organischen Farbstoffs bei einem Verfahren zum Beschichten eines Substrats für den visuellen Nachweis der Schichtbildung auf dem Substrat,
wobei das Verfahren folgendes aufweist:
- aufbringen einer Beschichtungsflüssigkeit für eine Photokatalysatorschicht auf dem Substrat, wobei die Beschichtungsflüssigkeit für eine Photokatalysatorschicht einen Photokatalysator und einen organischen Farbstoff enthält, der von einem Photokatalysator zersetzt und entfärbt wird, und wobei die Beschichtungsflüssigkeit für eine Photokatalysatorschicht eine Beschichtungsflüssigkeit für eine transparente Photokatalysatorschicht ist.

5. Verwendung eines organischen Farbstoffs bei einem Verfahren nach Anspruch 4 zum Beschichten eines Substrats für den visuellen Nachweis der Schichtbildung auf der Schicht aus zersetzungsbeständigem Bindemittel,
wobei das Verfahren folgendes aufweist:
- eine Beschichtungsflüssigkeit für ein zersetzungsbeständiges Bindemittel wird als Unterschicht auf dem Substrat aufgebraucht; und
- aufbringen einer Beschichtungsflüssigkeit für eine Photokatalysatorschicht auf der Unterschicht aus dem zersetzungsbeständigen Bindemittel, wobei die Beschichtungsflüssigkeit für eine Photokatalysatorschicht einen Photokatalysator und einen organischen Farbstoff enthält, der von einem Photokatalysator zersetzt und entfärbt wird, und wobei die Beschichtungsflüssigkeit für eine Photokatalysatorschicht eine Beschichtungsflüssigkeit für eine transparente Photokatalysatorschicht ist.

6. Verwendung eines organischen Farbstoffs bei einem Verfahren zum Beschichten eines Substrats für den visuellen Nachweis der Schichtbildung auf dem Substrat,
wobei das Verfahren folgendes aufweist:
- eine Beschichtungsflüssigkeit für ein zersetzungsbeständiges Bindemittel, die einen organischen Farbstoff enthält, wird als Unterschicht auf dem Substrat aufgebracht, wobei der organische Farbstoff von einem Photokatalysator zersetzt und entfärbt wird; und
- aufbringen einer Beschichtungsflüssigkeit für eine Photokatalysatorschicht auf der Unterschicht aus dem zersetzungsbeständigen Bindemittel, wobei die Beschichtungsflüssigkeit für eine Photokatalysatorschicht einen Photokatalysator enthält, und wobei die Beschichtungsflüssigkeit für eine Photokatalysatorschicht eine Beschichtungsflüssigkeit für eine transparente Photokatalysatorschicht ist.

7. Verwendung nach einem der Ansprüche 1 bis 6,
wobei der organische Farbstoff ferner dazu verwendet wird, die physikalische Festigkeit der auf dem Substrat gebildeten Photokatalysatorschicht zu verbessern, wobei der organische Farbstoff ein Metallatome enthaltender Farbstoff ist.

8. Verwendung nach einem der Ansprüche 1 bis 7,
wobei der organische Farbstoff in Form von einem oder mehreren organischen Farbstoffen vorliegt, die aus Azo-, Phthalocyanin- und einen Metallkomplex enthaltenden kondensierten polycyclischen Farbstoffen und Pigmenten ausgewählt sind.

9. Verwendung nach einem der Ansprüche 1 bis 8,
wobei der organische Farbstoff zusammen mit einem oder mehreren Zusätzen verwendet wird, die aus Dispersionsmitteln, die Feuchtigkeit regelnden Mitteln und Verdickungsmitteln ausgewählt sind.

10. Verwendung nach einem der Ansprüche 1 bis 9,
wobei die Beschichtungsflüssigkeit für eine Photokatalysatorschicht eine Suspension aufweist, die Halbleitermetallpartikel und ein Bindemittel enthält.

11. Verwendung nach einem der Ansprüche 1 bis 10,
wobei der Photokatalysator ausgewählt ist aus der Gruppe, die aus folgenden Substanzen besteht: TiO₂, ZnO, SrTiO₃, CdS, CdO, CaP, InP, In₂O₃, CaAs, BaTiO₃, K₂NbO₃, Fe₂O₃, Ta₂O₅, WO₃, SnO₂, Bi₂O₃, NiO, Cu₂O, SiC, SiO₂, MoS₂, MoS₃, InPb, RuO₂, CeO₂.

12. Verwendung nach einem der Ansprüche 1 bis 11,
wobei der organische Farbstoff ein organischer Farbstoff ist, dessen Molekül ein metallisches Element aufweist.

13. Verwendung nach Anspruch 12,
wobei das metallische Element aus der Gruppe ausgewählt ist, die aus Fe, Cu, Ca und Sr besteht.

14. Verwendung nach einem der Ansprüche 1 bis 13,
wobei die Beschichtungsflüssigkeit für eine transparente Photokatalysatorschicht ein Sol eines amorphen Titanperoxids und ein Sol des Titanoxids Anatas aufweist.

15. Verwendung nach einem der Ansprüche 1 bis 14,
wobei die Beschichtungsflüssigkeit für ein zersetzungsbeständiges Bindemittel ein Sol eines amorphen Titanperoxids ist.

## Revendications

1. Utilisation d'un colorant organique dans un procédé de revêtement d'un substrat, pour vérifier visuellement la capacité photocatalytique du film photocatalyseur formé sur le substrat en vérifiant visuellement la décoloration du film photocatalyseur, ledit procédé comprenant:
- l'application sur le substrat d'un liquide de dépôt de film photocatalyseur, dans laquelle le liquide de dépôt de film photocatalyseur contient un photocatalyseur et un colorant organique qui est décomposé et décoloré par un photocatalyseur et le liquide de dépôt de film photocatalyseur est un liquide de dépôt de film photocatalyseur transparent.

2. Utilisation d'un colorant organique dans un procédé de revêtement d'un substrat selon la revendication 1, pour vérifier visuellement la capacité photocatalytique du film photocatalyseur formé sur le substrat en vérifiant visuellement la décoloration du film photocatalyseur, ledit procédé comprenant:
- l'application sur le substrat d'un liquide de dépôt de liant résistant à la décomposition en tant que sous-couche; et
- l'application d'un liquide de dépôt de film photocatalyseur sur la sous-couche de liant résistant à la décomposition, dans laquelle le liquide de dépôt de film photocatalyseur contient un photocatalyseur et un colorant organique décomposé et décoloré par un photocatalyseur et le liquide de dépôt de film photocatalyseur est un liquide de dépôt de film photocatalyseur transparent.

3. Utilisation d'un colorant organique dans un procédé de revêtement d'un substrat, pour vérifier visuellement la capacité photocatalytique du film photocatalyseur formé sur le substrat en vérifiant visuellement la décoloration de la couche de liant résistant à la décomposition, ledit procédé comprenant:
- l'application sur le substrat d'un liquide de dépôt de liant résistant à la décomposition contenant un colorant organique en tant que sous-couche, dans laquelle le colorant organique est décomposé et décoloré par un photocatalyseur; et
- l'application d'un liquide de dépôt de film photocatalyseur sur la sous-couche de liant résistant à la décomposition, dans laquelle le liquide de dépôt de film photocatalyseur contient un photocatalyseur et le liquide de dépôt de film photocatalyseur est un liquide de dépôt de film photocatalyseur transparent.

4. Utilisation d'un colorant organique dans un procédé de revêtement d'un substrat, pour vérifier visuellement la formation de film sur le substrat, ledit procédé comprenant:
- l'application d'un liquide de dépôt de film photocatalyseur sur le substrat, dans laquelle le liquide de dépôt de film photocatalyseur contient un photocatalyseur et un colorant organique décomposé et décoloré par un photocatalyseur et le liquide de dépôt de film photocatalyseur est un liquide de dépôt de film photocatalyseur transparent.

5. Utilisation d'un colorant organique dans un procédé de revêtement d'un substrat selon la revendication 4, pour vérifier visuellement la formation de film sur la couche de liant résistant à la décomposition, ledit procédé comprenant:
- l'application sur le substrat d'un liquide de dépôt de liant résistant à la décomposition en tant que sous-couche; et
- l'application d'un liquide de dépôt de film photocatalyseur sur la sous-couche de liant résistant à la décomposition, dans laquelle le liquide de dépôt de film photocatalyseur contient un photocatalyseur et un colorant organique décomposé et décoloré par un photocatalyseur et le liquide de dépôt de film photocatalyseur est un liquide de dépôt de film photocatalyseur transparent.

6. Utilisation d'un colorant organique dans un procédé de revêtement d'un substrat, pour vérifier visuellement la formation de film sur le substrat, ledit procédé comprenant:
- l'application sur le substrat d'un liquide de dépôt de liant résistant à la décomposition contenant un colorant organique en tant que sous-couche, dans laquelle le colorant organique est décomposé et décoloré par un photocatalyseur; et
- l'application d'un liquide de dépôt de film photocatalyseur sur la sous-couche de liant résistant à la décomposition, dans laquelle le liquide de dépôt de film photocatalyseur contient un photocatalyseur et le liquide de dépôt de film photocatalyseur est un liquide de dépôt de film photocatalyseur transparent.

7. Utilisation selon l'une quelconque des revendications 1 à 6, dans laquelle le colorant organique est utilisé en plus pour améliorer la solidité physique du film photocatalyseur formé sur le substrat, le colorant organique étant un colorant organique qui contient un atome métallique.

8. Utilisation selon l'une quelconque des revendications 1 à 7, dans laquelle le colorant organique est un ou plusieurs colorants organiques choisis parmi des colorants et pigments azoïques, des colorants et pigments à base de phtalocyanine et des colorants et pigments polycycliques condensés contenant un complexe métallique.

9. Utilisation selon l'une quelconque des revendications 1 à 8, dans laquelle le colorant organique est utilisé ensemble avec un ou plusieurs additifs choisis parmi des agents dispersants, des agents hydratants et des agents épaississants.

10. Utilisation selon l'une quelconque des revendications 1 à 9, dans laquelle le liquide de dépôt de film photocatalyseur comprend une suspension contenant des particules de métal semi-conducteur et un liant.

11. Utilisation selon l'une quelconque des revendications 1 à 10, dans laquelle le photocatalyseur est choisi dans le groupe constitué par les TiO₂, ZnO, SrTiO₃, CdS, CdO, CaP, InP, In₂O₃, CaAs, BaTiO₃, K₂NbO₃, Fe₂O₃, Ta₂O₅, WO₃, SnO₂, Bi₂O₃, NiO, Cu₂O, SiC, SiO₂, MoS₂, MoS₃, InPb, RuO₂, CeO₂.

12. Utilisation selon l'une quelconque des revendications 1 à 11, dans laquelle le colorant organique est un colorant organique dont la molécule comprend un élément métallique.

13. Utilisation selon la revendication 12, dans laquelle l'élément métallique est choisi dans le groupe constitué par Fe, Cu, Ca et Sr.

14. Utilisation selon l'une quelconque des revendications 1 à 13, dans laquelle le liquide de dépôt de film photocatalyseur transparent comprend un sol de peroxyde de titane amorphe et un sol d'oxyde de titane anatase.

15. Utilisation selon l'une quelconque des revendications 1 à 14, dans laquelle le liquide de dépôt de liant résistant à la décomposition est un sol de peroxyde de titane amorphe.
